# EUROPÄISCHE PATENTSCHRIFT

(11) **EP 3 345 821 B1**
(45) Veröffentlichungstag und Bekanntmachung des Hinweises auf die Patenterteilung: **12.08.2020**
(21) Anmeldenummer: 17207637.4
(22) Anmeldetag: 15.12.2017
(51) Int. Cl.: B62L 1/00, B62L 3/02, B60T 8/42, B60T 8/32

(54) **BREMSASSISTENZEINRICHTUNG, HYDRAULISCHE BREMSANLAGE UND FAHRZEUG**
BRAKE ASSISTANCE DEVICE, HYDRAULIC BRAKE SYSTEM AND VEHICLE
DISPOSITIF D'AIDE AU FREINAGE, INSTALLATION DE FREINAGE HYDRAULIQUE ET VÉHICULE

(30) Priorität: 04.01.2017 DE 102017200053
(43) Veröffentlichungstag der Anmeldung: 11.07.2018
(73) Patentinhaber: Robert Bosch GmbH, 70442 Stuttgart (DE)
(72) Erfinder: Wienss, Andreas, 72800 Eningen Unter Achalm (DE); Widmaier, Georg, 71229 Leonberg (DE); Faust, Arno, 72131 Ofterdingen (DE); Dasbach, Gregor, 72074 Tuebingen (DE); Greiner, Rinaldo, 72762 Reutlingen (DE)

(56) Entgegenhaltungen:
- WO-A1-97/37878
- CN-A- 105 882 857
- DE-A1- 1 780 667
- DE-A1-102010 038 525
- DE-A1-102014 201 792

## Beschreibung

### Stand der Technik

Die vorliegende Erfindung betrifft eine Bremsassistenzeinrichtung, eine hydraulische Bremsanlage sowie ein Fahrzeug. Die vorliegende Erfindung betrifft insbesondere eine Bremsassistenzeinrichtung für eine hydraulische Bremsanlage, für ein mit Muskelkraft und zusätzlich mit oder ohne Motorkraft antreibbares Fahrzeug, ein Fahrrad, Elektrofahrrad, eBike, Pedelec, Motorrad, Kleinkraftrad oder ein Scooter, eine hydraulische Bremsanlage für ein mit Muskelkraft und/oder mit Motorkraft antreibbares Fahrzeug, sowie ein mit Muskelkraft und/oder mit Motorkraft antreibbares Fahrzeug als solches, insbesondere ein Fahrrad, Elektrofahrrad, eBike, Pedelec, Motorrad, Kleinkraftrad oder ein Scooter.

Zum Abbremsen von Rädern an Fahrzeugen werden auch hydraulische Bremsanlagen verwendet. Aus Sicherheitsgründen werden bei derartigen Bremsanlagen vermehrt Bremsassistenzeinrichtungen im Sinne eines Antiblockierschutzes (ABS) eingesetzt. Dabei soll mit derartigen Bremsassistenzeinrichtungen ein Blockieren eines gebremsten Rades verhindert werden, um einen möglichst geringen Bremsweg und/oder einen möglichst hohen Grad an Spurtreue beim Bremsen zu erreichen.

Insbesondere im Bereich mit Muskelkraft und/oder mit Motorkraft antreibbaren Fahrzeugen, also zum Beispiel im Bereich von Fahrrädern, Elektrofahrrädern oder dergleichen sind bisherige Bremsassistenzeinrichtungen auf Grund ihrer Komplexität und ihres Energieverbrauchs nur begrenzt einsetzbar.

Aus der Schrift WO 97/37878 A1 ist ein hydraulisches Bremssystem bekannt, bei dem mittels eines Kolbens ein Flüssigkeitsvolumen variiert werden kann. Diese Variation des Flüssigkeitsvolumens wird dazu genutzt, den Bremsdruck in der an das Flüssigkeitsvolumen angeschlossenen Bremsleitung und somit auch an den Radbremsen zu verändern, beispielsweise für Bremsvorgänge. Um den Kolben zu bewegen wird ein Material verwendet, welches sich durch einen Phasenwechsel kontrahieren lässt. Dieses Dokument legt die Präambel des Anspruchs 1 offen. Offenbarung der Erfindung

Die erfindungsgemäße Bremsanpassungseinrichtung mit den Merkmalen des unabhängigen Anspruches 1 weist demgegenüber den Vorteil auf, dass mit vergleichsweise einfachen Mitteln und bei vergleichsweise geringem Energiebedarf eine Bremsassistenzfunktion verwirklicht werden kann. Dies wird erfindungsgemäß mit den Merkmalen des unabhängigen Anspruches 1 dadurch erreicht, dass eine Bremsassistenzeinrichtung für eine hydraulische Bremsanlage, für ein mit Muskelkraft und zusätzlich mit oder ohne Motorkraft antreibbares Fahrzeug, Fahrrad, Elektrofahrrad, eBike, Pedelec, Motorrad, Kleinkraftrad oder Scooter, geschaffen wird, mit einem Anpassungsgefäß und einem Fluidwiderstandselement, wobei das Anpassungsgefäß über das Fluidwiderstandselement mit einer Bremsleitung, einem Geber und/oder einem Nehmer der Bremsanlage hydraulisch verbindbar ist und wobei das Fluidwiderstandselement für einen anpassbaren Fluidübertritt zwischen Bremsleitung, Geber bzw. Nehmer und Anpassungsgefäß mit einem steuerbar anpassbaren Fluidwiderstand gegenüber einem Bremsfluid in der Bremsleitung, dem Geber und/oder dem Nehmer ausgebildet ist, wobei das Anpassungsgefäß als Akkumulator der Bremsassistenzeinrichtung ausgebildet ist. Ein Kernaspekt der vorliegenden Erfindung ist dabei das Vorsehen eines Anpassungsgefäßes und dessen Anbindbarkeit an eine Bremsleitung, einen Geber und/oder einen Nehmer über ein in seinem Fluidwiderstand variierbares Fluidwiderstandselement. Durch Anpassung des Fluidwiderstandes, also des Widerstandes gegenüber dem Bremsfluid beim Übertritt zwischen der Bremsleitung, dem Geber bzw. dem Nehmer und dem Anpassungsgefäß, kann in variierbarer Weise direkt der durch eine Bremsbetätigung erzeugte Druck im Bremssystem verändert werden, weil durch die Variation des Fluidwiderstands in dem Fluidwiderstandselement die Steifigkeit des Bremssystems verändert wird. Zusätzlich oder alternativ kann in variierbarer Weise ein Teil des durch die Bremsbetätigung erzeugten Volumenstroms und Bremsfluids aus der Bremsleitung, dem Geber bzw. dem Nehmer variiert abgezweigt werden, so dass - je nach Art der Variation der Abzweigung und mithin des Fluidwiderstands - über eine Aufweichung des Bremsverhaltens eine Druckabsenkung durch Reduzieren oder allgemein eine Druckänderung durch Modifizieren der Steifigkeit erfolgt. Das bedeutet, dass bei einem gegebenen Betätigungsweg durch Betätigung eines Bremsmittels, zum Beispiel eines Bremshebels, durch den Benutzer ein sich zunächst einstellender Druck mit einer Variation der Steifigkeit des Fluidwiderstandselements über eine Anpassung des Fluidwiderstands in einer bevorstehenden Gefahrensituation letztlich eine Druckabsenkung in der Bremsleitung, dem Geber bzw. dem Nehmer erreicht und somit ein Blockieren eines oder mehrerer Räder verhindert wird. Alternativ oder zusätzlich ist auch ein Steigern des Drucks in der Bremsleitung, dem Geber bzw. dem Nehmer denkbar, um gezielt in das Bremsgeschehen einzugreifen.

Es geht nicht nur darum, mit dem variierbaren Druckelement selbst ein ABS zu bauen, sondern alternativ oder zusätzlich durch eine variierbare Steifigkeit auch einen vorhandenen Regelmechanismus optimal zu nutzen.

Dabei wird erfindungsgemäß mit dem Fluidwiderstand der Druck insbesondere direkt geregelt und nicht mehr oder nicht nur indirekt über das Volumen.

Unter dem Begriff Fluidwiderstand wird im Sinne der vorliegenden Erfindung in diesem Zusammenhang ein jeglicher Widerstand verstanden, der im Betrieb in mechanischer Weise dem Strömen des Bremsfluids zwischen der Bremsleitung und dem Anpassungsgefäß entgegengesetzt wird. Es kann sich dabei um einen hydrodynamischen, also aus der Bewegung des Fluids heraus entstehenden Strömungswiderstand handeln, z.B. in einem Rohr- oder Kapillarsystem, oder um einen hydrostatischen Widerstand, im Sinne eines Gegendrucks oder dergleichen, z.B. verursacht durch ein elastisches Hindernis.

Unter einem Geber wird im Sinne der Erfindung eine Struktur verstanden, in welcher zum Beispiel über einen Aktuator, einen Bremshebel oder dergleichen Druck im Bremsfluid aufgebaut wird. Unter einem Nehmer wird im Sinne der Erfindung eine Struktur verstanden, an welche der aufgebaute Druck im Bremsfluid weitergeleitet wird. Dabei kann es sich um einen Druck- oder Bremszylinder im Bereich des Bremssattels oder dergleichen handeln.

Die Unteransprüche zeigen bevorzugte Weiterbildungen der Erfindung.

Bevor im Einzelnen auf die erfindungsgemäßen Ausgestaltungsformen des jeweiligen Anpassungsgefäßes als solche eingegangen wird, werden zunächst strukturelle Aspekte im Hinblick auf die eigentliche ABS-Funktion erläutert.

Die Bremsassistenzfunktion kann mit besonders einfachen Mitteln dadurch realisiert werden, dass gemäß einer bevorzugten Ausgestaltungsform der erfindungsgemäßen Bremsassistenzeinrichtung das Anpassungsgefäß eingerichtet ist, über eine Abzweigungsleitung und eine Einmündung zwischen einem geberseitig gelegenen Abschnitt der Bremsleitung und einem nehmer- oder bremsseitig gelegenen Abschnitt der Bremsleitung hydraulisch verbunden zu sein. Das bedeutet, dass das reine Vorsehen eines Anpassungsgefäßes zur Druck- und/oder Volumenaufnahme durch Variation des Fluidwiderstands eines zu Grunde liegenden Fluidwiderstandselements in der eigentlichen Bremsleitung zu einem steuerbaren Druckabfall genutzt werden kann, um in einem Bremsassistenzfall, zum Beispiel in einem Gefahrenfall, bei welchen ein oder mehrere Räder zum Blockieren neigen, entgegen der Veranlassung durch den Benutzer einen Druckabfall in der Bremsleitung zu generieren, um dadurch ein Blockieren eines oder mehrerer Räder zu verhindern.

Dabei sind in dieser einfachsten Ausführungsform keine weiteren strömungstechnischen Elemente notwendig, obschon diese für komplexere Bremsassistenzaufgaben von Vorteil sind.

Bei einer anderen Ausgestaltungsform der erfindungsgemäßen Bremsassistenzeinrichtung ist diese zusätzlich zum Anpassungsgefäß für einen höheren Grad an Zuverlässigkeit mit einem Einlassventil ausgebildet, insbesondere (i) in einem vom im normalen Betrieb oder stromlos offenen Typ ausgebildet und/oder (ii) eingerichtet, einen oder den geber- oder reservoirseitig gelegenen Abschnitt der Bremsleitung und einen oder den nehmer- oder bremsseitig gelegenen Abschnitt der Bremsleitung steuerbar hydraulisch zu verbinden und zu trennen. Durch diese Maßnahmen kann verhindert werden, dass bei einer Bremsassistenzfunktion durch Betätigung eines Bremshebels durch den Benutzer in der Bremsleitung weiterhin Druck aufgebaut wird. Auf diese Weise wird der geberseitige Teil der Bremsleitung hydraulisch vom nehmerseitigen Teil der Bremsleitung entkoppelt, wobei zusätzlich auf der Nehmerseite durch das erfindungsgemäß vorgesehene Anpassungsgefäß der Druck in der Bremsleitung durch Variation des Fluidwiderstands abgesenkt werden kann, um das Blockieren ein oder mehrerer Räder zu verhindern.

Das erfindungsgemäße Konzept ermöglicht auch das Nachrüsten bereits bestehender Bremsassistenzsysteme. So ist es gemäß einer bevorzugten Weiterbildung der erfindungsgemäßen Bremsassistenzeinrichtung vorgesehen, dass das Anpassungsgefäß zusätzlich zu einem Akkumulator oder Aufnahmegefäß einer herkömmlichen Bremsassistenzeinrichtung ausgebildet ist, insbesondere in der herkömmlichen Bremsassistenzeinrichtung brems- oder nehmerseitig und/oder seriell nachgeschalteter Weise.

Dabei kann es insbesondere vorgesehen sein, dass eine für eine bestehende Bremsassistenzeinrichtung vorgesehene Steuereinrichtung auch dazu ausgebildet ist, steuernd auf das erfindungsgemäß vorgesehene Anpassungsgefäß zuzugreifen, um dort den Fluidwiderstands des Fluidwiderstandselements in Abhängigkeit von bestimmten Betriebs- und Fahrparametern zu ändern, um dadurch die Bremsassistenzfunktion besonders zuverlässig und vorzugsweise auch in niedrigen Druckbereichen und bei geringen Reibwerten des Fahrbahnuntergrunds zu realisieren.

Alternativ dazu kann das erfindungsgemäß ausgestaltete Anpassungsgefäß einfach den herkömmlichen Akkumulator in einem bestehenden und/oder herkömmlichen Bremsassistenzsystems ersetzen. Bei einer alternativen Weiterbildung ist also das Anpassungsgefäß als ein oder der Akkumulator einer - insbesondere ansonsten herkömmlichen - Bremsassistenzeinrichtung ausgebildet ist und insbesondere über eine Abzweigungsleitung und eine Einmündung zwischen einem geberseitig gelegenen Abschnitt einer Umgehungsleitung eines Einlassventils und einem nehmer- oder bremsseitig gelegenen Abschnitt der Umgehungsleitung mit der Umgehungsleitung hydraulisch verbunden oder verbindbar, insbesondere in zu einem Auslassventil geberseitig vorgeschalteter Weise.

Zur Realisierung der Bremsassistenzfunktion werden in vorteilhafter Weise Betriebs- und/oder Fahrparameter eines zu Grunde liegenden Fahrzeugs erfasst, um die Funktion und die Eigenschaften der einzelnen Komponenten der Bremsassistenzeinrichtung zu steuern oder zu regeln.

Dazu ist es von besonderem Vorteil, wenn die Bremsassistenzeinrichtung eine Auswerte- und Steuereinheit aufweist, welche zur Steuerung des Zustands des Fluidwiderstandselements ausgebildet ist, insbesondere über eine Steuerung des Wertes des Fluidwiderstands des Fluidwiderstandselements, insbesondere auf der Grundlage von mindestens einem Sensor erfasster Werte.

Nachfolgend werden maßgebliche mögliche Eigenschaften des der erfindungsgemäßen Bremsassistenzeinrichtung zu Grunde liegenden Fluidwiderstandselements beschrieben.

Eine baulich besonders einfach ausgestaltete Bremsassistenzeinrichtung ergibt sich, wenn das Fluidwiderstandselement eine Membran oder Wand aufweist, welche eine Öffnung des Anpassungsgefäßes für einen Fluiddurchtritt verschließt und/oder das Anpassungsgefäß in zwei voneinander getrennte Kompartimente unterteilt.

Durch entsprechende Ausgestaltung der Membran oder Wand kann der variable Fluidwiderstand des Fluidwiderstandselements erzeugt werden.

So ist es bei einer bevorzugten Ausführungsform vorgesehen, dass die Membran eine variierbare Steifigkeit ausweist.

Die variierbare Steifigkeit der Membran kann über verschiedener Mittel realisiert werden.

So ist es bei einer Weiterbildung der erfindungsgemäßen Bremsassistenzeinrichtung vorgesehen, dass die variierbare Steifigkeit der Membran oder Wand bewirkt wird durch
- eine variierbare Elastizität, innere Beweglichkeit, insbesondere Dehnbarkeit und/oder Biegbarkeit, und/oder äußere Verschiebbarkeit,
- eine variierbare Vorspannung einer die Membran oder Wand von einer Rückseite der Membran unterstützenden elastischen Einrichtung, insbesondere einer Feder,
- eine Unterstützung der Membran oder Wand von einer Rückseite durch ein Anpassungsfluid oder-gas entsprechend einer variierbaren Kompressibilität, entsprechend einem variierbaren Druck und/oder entsprechend einem variierbaren Volumen,
- eine Unterstützung der Membran oder Wand von einer Rückseite durch eine sich von einem Rand der Membran oder Wand her sich erstreckenden Lochblende entsprechend einem variierbaren Durchmesser des Lochs,
- eine über eine Aufhängung der Membran oder Wand - insbesondere über deren Rand - aufprägte entsprechend variierbare Zugspannung
oder deren beliebige Kombination.

Im Sinne der vorliegenden Erfindung können die Membran oder die Wand als elastische/flexible oder als starre Komponente ausgebildet sein. Die variierbare Steifigkeit ergibt sich dann aus den variierbaren elastischen/flexiblen Eigenschaften und/oder einer variierbaren Beweglichkeit der jeweiligen Membran oder Wand in Bezug auf andere Baukomponenten, zum Beispiel im Sinne einer Verschiebbarkeit oder Verschwenkbarkeit.

Insbesondere kann es sich bei der Membran oder Wand eine Komponente handeln, welche eine Stirnseite oder Stirnfläche eines in einem Volumen verschiebbaren Kolbens oder dergleichen bildet.

Nachfolgend werden die Begriffe Membran und Wand synonym verwendet, sofern nicht explizit etwas anderes gesagt wird.

Alternativ oder zusätzlich können auch andere Maßnahmen zur Ausgestaltung des Fluidwiderstandselements, also jenseits der Ausgestaltung mit oder als Membran, versehen sein.

Bei anderen alternativen oder zusätzlichen Fortbildungen der erfindungsgemäßen Bremsassistenzeinrichtung weist das Fluidwiderstandselement ein Durchströmungselement auf, welches eine Öffnung des Anpassungsgefäßes für einen Fluiddurchtritt verschließt und/oder das Anpassungsgefäß in zwei voneinander getrennte Kompartimente unterteilt und welches einen variierbaren Strömungswiderstand aufweist, insbesondere über einen entsprechend variierbaren effektiven Strömungsquerschnitt.

Zur konkreten Realisierung der Variierbarkeit des Fluidwiderstands des Fluidwiderstandselements können sämtliche manuellen Maßnahmen vorgesehen sein.

Diese können ersetzt oder ergänzt werden durch angetriebene Mechanismen, das heißt zum Beispiel durch entsprechende Verstellmechanismen, auch in automatischer Form.

Ferner betrifft die vorliegende Erfindung eine hydraulische Bremsanlage für ein mit Muskelkraft und zusätzlich mit oder ohne Motorkraft antreibbares Fahrzeug, Fahrrad,

Elektrofahrrad, eBike und/oder Pedelec. Diese kann ausgebildet sein mit einem Geber für ein Bremsfluid, einer Bremse, insbesondere als Nehmer, einer Bremsleitung zur hydraulischen Verbindung des Gebers mittels eines Bremsfluids mit der Bremse und einer erfindungsgemäßen Bremsassistenzeinrichtung, welche mit der Bremsleitung, einer Umgehungsleitung, dem Geber und/oder dem Nehmer über das Fluidwiderstandselement der Bremsassistenzeinrichtung hydraulisch verbunden ist.

Dabei kann das Bremsfluid der Bremsleitung aus einem Geberzylinder zugeführt werden, insbesondere durch Wirkung einer Bremsbetätigungseinrichtung, zum Beispiel in Form eines Bremshebels oder Bremspedals.

Bei einer vorteilhaften Weiterbildung der erfindungsgemäßen Bremsanlage ist das Anpassungsgefäß über eine Abzweigungsleitung zwischen einem geberseitig gelegenen Abschnitt der Bremsleitung oder einer Umgehungsleitung und einem nehmer- und bremsseitig gelegenen Abschnitt der Bremsleitung oder der Umgehungsleitung mit der Bremsleitung, der Umgehungsleitung, dem Geber und/oder dem Nehmer hydraulisch verbunden oder verbindbar.

Dabei bewirkt die Abzweigungsleitung eine Unterteilung des Fluidstroms des Bremsfluids in der Bremsleitung, die Umgehungsleitung, den Geber und/oder den Nehmer. Je nach Maß oder Anteil der abgezweigten Menge an Bremsfluid wird entsprechend dem Fluidwiderstand und insbesondere der Steifigkeit die Volumen- und/oder Druckvariation der erfindungsgemäßen hydraulischen Bremsanlage moduliert, um entsprechende Bremsassistenzfunktionen zu realisieren.

Gemäß einem weiteren Aspekt der vorliegenden Erfindung wird auch ein mit Muskelkraft und zusätzlich mit oder ohne Motorkraft antreibbares Fahrzeug geschaffen, insbesondere ein Fahrrad, Elektrofahrrad, eBike, Pedelec, Motorrad, Kleinkraftrad oder Scooter.

Das erfindungsgemäße Fahrzeug weist mindestens ein Rad auf und eine erfindungsgemäß ausgestaltete Bremsanlage zum Bremsen des mindestens einen Rades.

### Kurzbeschreibung der Figuren

Unter Bezugnahme auf die beigefügten Figuren werden Ausführungsformen der Erfindung im Detail beschrieben.
- Figur 1: ist eine schematische Seitenansicht einer Ausführungsform des erfindungsgemäßen Fahrzeugs.
- Figur 2: ist eine schematische Ansicht, welche eine Ausführungsform der erfindungsgemäßen Bremsanpassungseinrichtung zeigt.
- Figuren 3 und 4: sind Diagramme, die den typischen Verlauf der Bremskraft als Funktion der Betätigungskraft durch die bremsende Person beschreibt bzw. den Begriff der Steifigkeit des Bremsverhaltens und seine Variation erläutert.
- Figuren 5 bis 10: zeigen schematisch verschiedene Ausführungsformen der erfindungsgemäßen Bremsassistenzeinrichtung mit einem membranbasierten Fluidwiderstandselement.
- Figuren 11 bis 14: zeigen in schematischer Darstellung verschiedene Anwendungsfälle erfindungsgemäßer Bremsassistenzeinrichtungen bei entsprechenden erfindungsgemäßen hydraulischen Bremsanlagen.

### Bevorzugte Ausführungsformen der Erfindung

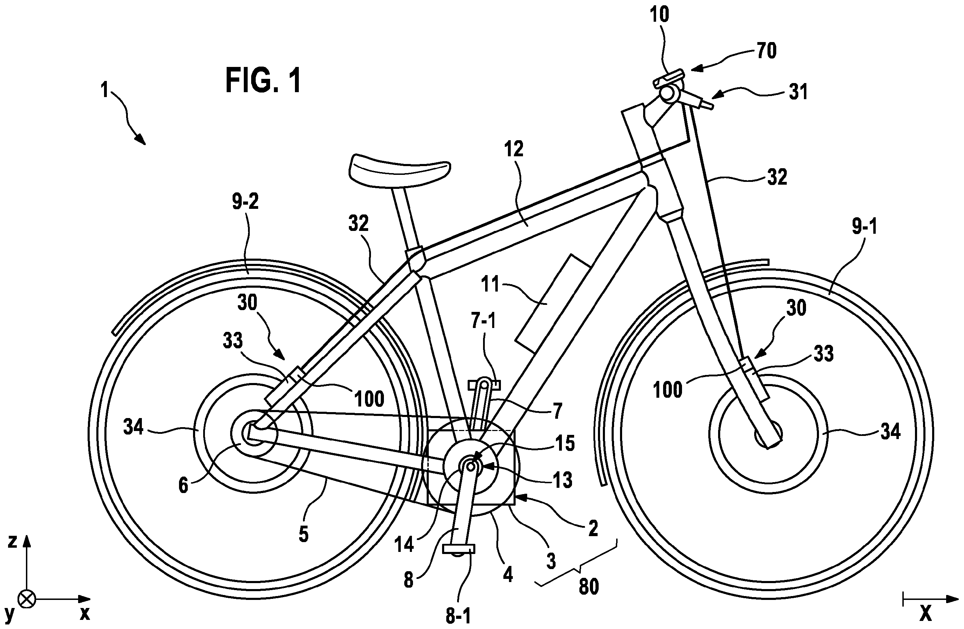

Nachfolgend werden unter Bezugnahme auf die Figuren 1 bis 14 Ausführungsbeispiele der Erfindung und deren technischer Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 sind ein Ritzel 6 und ggf. eine Gangschaltung angeordnet. Kurbeltrieb 2 und elektrischer Antrieb 3 bilden den Antrieb 80 des Fahrzeugs 1.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem elektrischen Antrieb 3 verbunden ist. Im oder am Rahmen 12 oder Gepäckträger ist ferner Batterie 11 ausgebildet, welche zur Stromversorgung des elektrischen Antriebes 3 dient.

Im Rahmen 12 oder in einer Antriebseinheit integriert ist ferner ein Kurbellager 13 oder Tretlager, welches ein Kurbelgehäuse 14 und eine Kurbelwelle 15 aufweist.

Im Bereich einer Bremsanlage 30, mittels welcher über Bremsleitungen 32 bei Betätigung des Bremshebels 31 ein Zugriff auf die Bremsschreiben 34 initiierbar ist, ist auch eine Ausführungsform der erfindungsgemäßen

Bremsanpassungseinrichtung 100 vorgesehen, entweder für eine der Bremsen 33 oder für beide Bremsen 33. In der Darstellung der Figur 1 weist die Bremsanlage 30 im Bereich jeder der Bremsen 33 eine eigene Bremsassistenzeinrichtung 100 zur individuellen Modulation der Steifigkeit der jeweiligen Bremse 33 zur Realisation einer Bremsassistenzfunktion auf. Dies ist jedoch nicht zwingend.

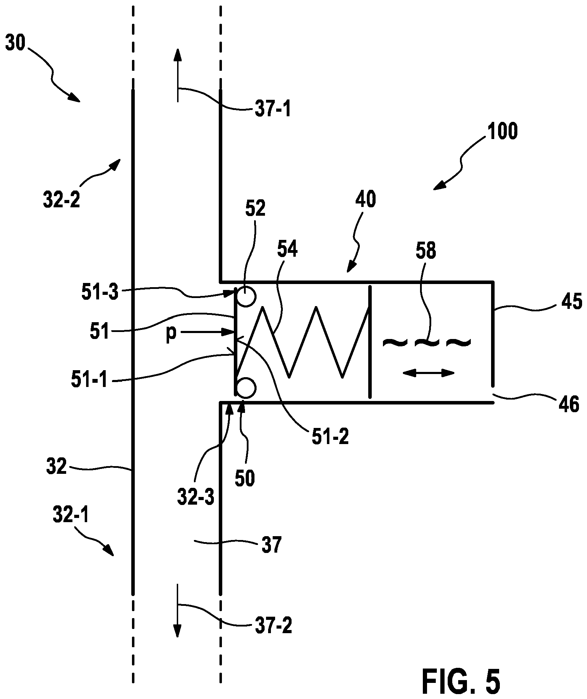

Bevor im Zusammenhang mit den Figuren 5 bis 10 mögliche Ausführungsformen des der erfindungsgemäßen Bremsassistenzeinrichtung 100 zu Grunde liegenden Anpassungsgefäßes 40 mit dem Fluidwiderstandselements 50 beschrieben werden, wird zunächst auf den Aufbau verschiedener Ausführungsformen der erfindungsgemäßen Bremsassistenzeinrichtung 100 eingegangen.

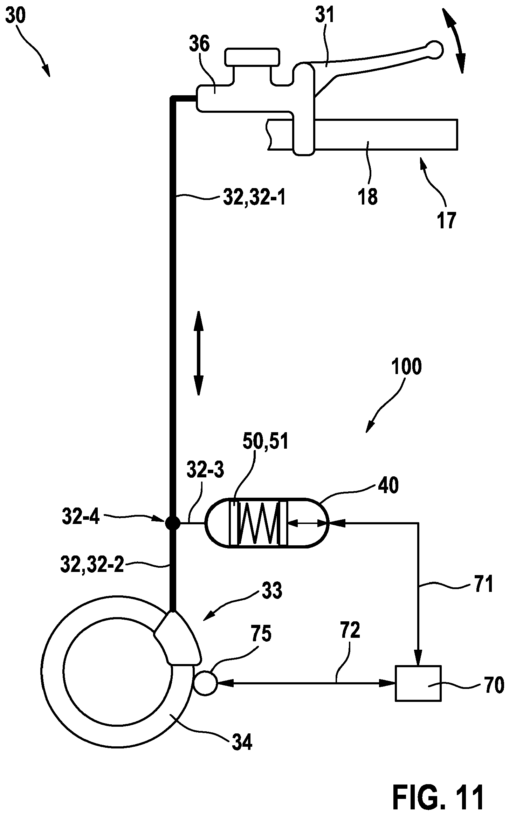

Die Figuren 11 bis 14 zeigen in schematischer Darstellung verschiedene Anwendungsfälle erfindungsgemäßer Bremsassistenzeinrichtungen 100 bei entsprechenden erfindungsgemäßen hydraulischen Bremsanlagen 30.

Kernbestandteile der Ausführungsform der erfindungsgemäßen Bremsanlage 30 gemäß Figur 1 sind der Bremshebel 31 mit dem Geberzylinder 36und eine Bremse 33, zum Beispiel mit einer Bremsscheibe 34, sowie eine Bremsleitung 32, zur hydraulischen Verbindung der Einheit aus Bremshebel 31 und Geberzylinder 36 mit der Bremse 33. Der Bremshebel 31 bewegt den Geberzylinder 36, mit dem dann der Druck aufgebaut wird. Zusätzlich befindet sich oben am Bremshebel 31 ein Ausgleichsreservoir, mit dem z.B. Bremsbelagverschleiß ausgeglichen wird. Das Reservoir ist nur in einer "Bremshebel-nicht-betätigt"-Position mit dem System über eine Schnüffelbohrung verbunden. Die Verbindung wird geschlossen, sobald sich der Kolben des Geberzylinders 36 bewegt.

In die Bremsleitung 32 mündet an der Einmündung 32-4 über eine Abzweigungsleitung 32-3 ein Anpassungsgefäß 40 als Bestandteil einer erfindungsgemäßen Bremsassistenzeinrichtung 100 mit einem Fluidwiderstandselements 50 nach Art einer Membran 51 oder einer Wand zur Definition eines variierbaren Fluidwiderstands im Hinblick auf das Bremsfluid 37 ein. An der Einmündung 32-4 wird die Bremsleitung 32 so in einen geberseitig in Abschnitt 32-1 und in einen nehmer- oder bremsseitigen Abschnitt 32-2 unterteilt. Innerhalb der erfindungsgemäßen Bremsassistenzeinrichtung 100 gemäß Figur 11 erfolgt die Steuerung des Anpassungsgefäßes 40 und insbesondere des Fluidwiderstands über die Anpassung der Steifigkeit der Wand oder Membran 51 als Fluidwiderstandselement 50, und zwar über eine Auswerte- und Steuereinheit 70, die auch kurz nur als Steuereinheit bezeichnet wird, über eine Ankopplung über eine Steuer- und Messleitung 71. Bei der Ausführungsform gemäß Figur 11 erfolgt die Steuerung auf der Grundlage von Messwerten, die von einem über eine weitere Steuer- und Messleitung 72 gekoppelten Sensor 75 geliefert werden und zum Beispiel das Drehen eines Rades beschreiben. Durch Auswertung der aus dem Sensor 75 erfassten Messdaten generiert die Auswerte- und Steuereinheit 70 entsprechende Steuersignale, die zur Einstellung des Fluidwiderstands über die Steuer- und Messleitung 71 an das Anpassungsgefäß 40 übermittelt werden, gegebenenfalls unter Zwischenschaltung eines für die Einstellung des Fluidwiderstands notwendigen Aktuators oder dergleichen.

Droht zum Beispiel ein Blockieren eines mit der Bremsscheibe 34 verbundenen Rades, zum Beispiel auf Grund einer ungünstigen Fahrbahnbeschaffenheit, so kann der Fluidwiderstand des Fluidwiderstandselements 50, zum Beispiel einer Membran 51 oder einer Wand, entsprechend eingestellt insbesondere abgesenkt werden, sodass ein durch Betätigung des Bremshebels 31 in der Bremsleitung 32 im Bremsfluid 37 aufgebauter Bremsdruck mit einem entsprechenden Volumen an Bremsfluid 37 im Anpassungsgefäß 40 aufgenommen wird. Als Folge davon sinkt der Gesamtdruck in der Bremsleitung 32 ab, der Eingriff der Bremse 33 an der Bremsscheibe 34 wird reduziert und damit ein Blockieren des Rades verhindert.

Diese erste Maßnahme ist in vielen Fällen bereits erfolgreich, um die Sicherheit bei der Bremsbetätigung zu steigern. Jedoch können Situationen eintreten, bei welchen das kurzzeitige Absenken des Bremsdrucks 32 durch Anpassung des Fluidwiderstands im Anpassungsgefäß 40 nicht ausreichend ist.

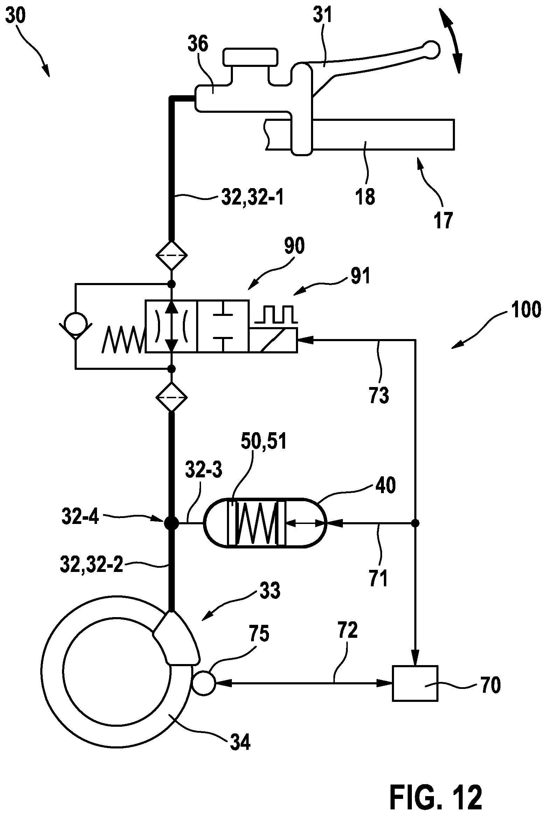

In solchen Fällen kann in einer weiteren Ausbaustufe der erfindungsgemäßen Bremsassistenzeinrichtung 100 im geberseitigen in Abschnitt 32-1 der Bremsleitung 32 ein in Reihe geschaltetes Einlassventil 91 ausgebildet sein. Dieses ist im Normalbetrieb, zum Beispiel im stromlosen Fall offen, also hydraulisch durchgehend. Diese Situation ist in der Ausführungsform der erfindungsgemäßen Bremsanlage 30 gemäß Figur 12 dargestellt.

Im Betrieb kann beim Vorliegen einer Bremsassistenzsituation, also bei einem nahenden Blockieren eines mit der Bremsscheibe 34 verbundenen Rades 9-1, 9-2 gemäß Figur 1, zunächst das Einlassventil 91 über die weitere Steuer- und Messleitung 73 mit einem Steuersignal beaufschlagt werden, um die Bremsleitung 32 zu unterbrechen und somit den geberseitig in Abschnitt 32-1 den Nehmer- oder bremsseitigen Abschnitt 32-2 der Bremsleitung 32 voneinander hydraulisch zu entkoppeln oder zu trennen und damit zu verhindern, dass der Benutzer durch Betätigung des Bremshebels 31 weiterhin Druck in der Bremsleitung 32 insgesamt aufbaut.

Sollte diese Maßnahme ein Aufheben des Bremsassistenzzustands Bremsanlage 30 nicht bewirken, so kann zusätzlich der Fluidwiderstand des Fluidwiderstandselements 50 des Anpassungsgefäßes 40 über die Steuer- und Messleitung 71 verringert werden, umso eine Aufnahme von Druck und Volumen des Bremsfluids 37 im nehmer- oder bremsseitigen Abschnitt 32-2 der Bremsleitung 32 zu bewirken und damit die von der Bremse 33 auf die Bremsscheibe 34 ausgeübte Kraft abzusenken.

Bei der Ausführungsform der erfindungsgemäßen Bremsanlage 30 mit der Bremsassistenzeinrichtung 100 kann das Einlassventil 91 auch im Zusammenhang stehen mit einem an sich bekannten ABS-System 90. In diesem Fall ist das Vorsehen des Anpassungsgefäßes 40 als Nachrüstmaßnahme zu einem bereits bestehenden ABS-System 90 denkbar. In diesem Fall kann die in Figur 12 explizit dargestellte Steuereinheit 70 auch gebildet werden von einer Steuereinheit in dem bereits bestehenden ABS-System 90.

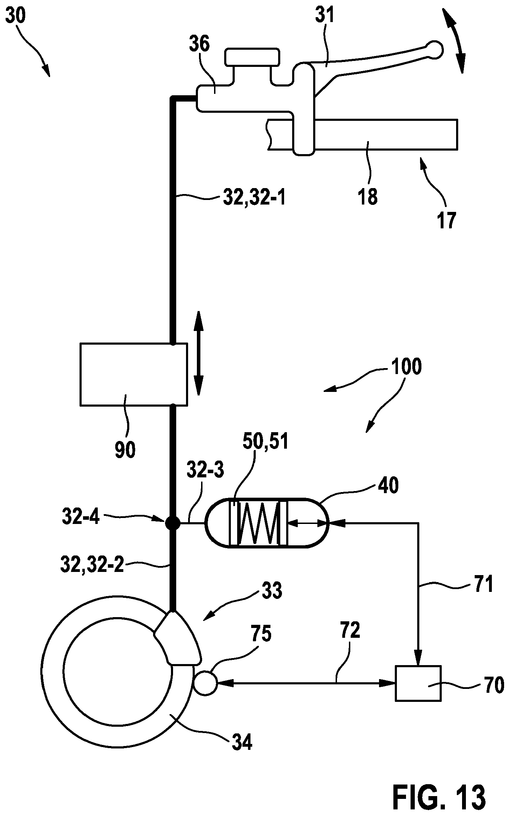

Grundsätzlich ist gemäß der Darstellung aus Figur 13 also auch eine Ergänzung eines bestehenden ABS-Systems 90 mit einem Anpassungsgefäß 40 mit einem Fluidwiderstandselements 50 denkbar, wobei entweder gemäß Figur 13 eine eigene und explizit dargestellte Auswerte- und Steuereinheit 70 mit Steuerleitungen 71, 72 verwendet werden kann oder auf die Steuereinheit des bestehenden ABS-Systems 90 zurückgegriffen wird.

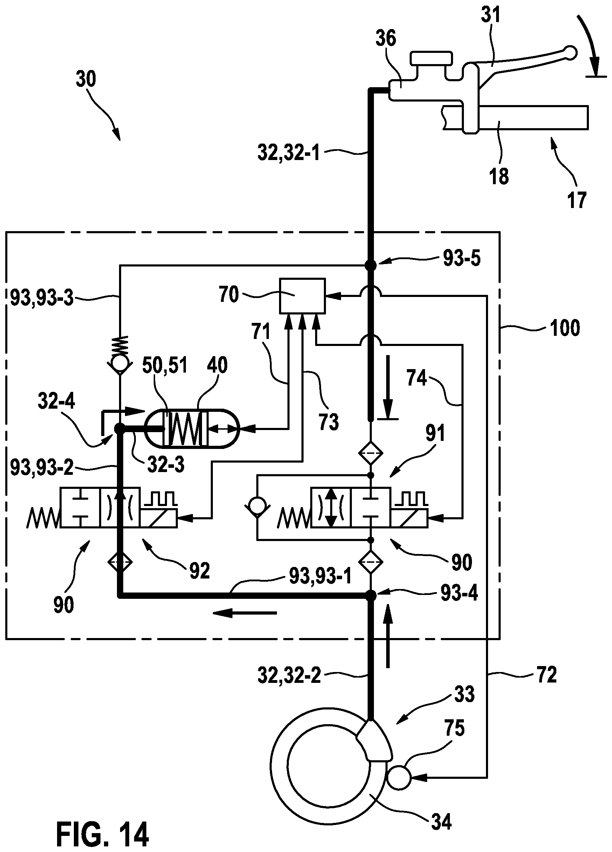

Figur 14 zeigt eine andere Alternative für den Aufbau einer erfindungsgemäßen hydraulischen Bremsanlage 30 und insbesondere einer darin verwendeten Ausgestaltungsform der erfindungsgemäßen Bremsassistenzeinrichtung 100.

Bei dieser Ausführungsform der erfindungsgemäßen Bremsassistenzeinrichtung 100 gemäß Figur 14 wird ein herkömmlicher Akkumulator zur Volumen- und damit indirekten Druckaufnahme über die Aufnahme von Bremsfluid 37 ersetzt durch eine Ausgestaltungsform des erfindungsgemäßen Anpassungsgefäßes 40 mit einem Fluidwiderstandselements 50, zum Beispiel in Form einer Membran oder einer Wand 51, mit steuerbar variablen Fluidwiderstand. Hier ist erfindungsgemäß über die Einstellung des Fluidwiderstands eine direkt Druckregelung möglich.

Bei dieser Ausführungsform ist das Anpassungsgefäß 40 über eine Abzweigungsleitung 32-3 einmündend in eine Umgehungsleitung 93, mit welcher das Einlassventil 91 umgangen wird, eingebracht. Dadurch wird die Umgehungsleitung 93 an der Einmündungsstelle 32-4 in einen geberseitigen in Abschnitt 93-3 und in einen nehmer- oder bremsseitigen Abschnitt 93-2, 93-1 unterteilt, wobei in letzterem ein Auslassventil 92 ausgebildet ist, insbesondere als Komponente eines herkömmlichen ABS-Systems 90. Die Umgehungsleitung 93 mündet an Einmündungsstellen 93-4 und 3 90-5 in die Bremsleitung 32 ein.

Über Steuer- und Messleitungen 71, 72, 73 und 74 sind das Anpassungsgefäß 40, der Sensor 75, das Auslassventil 92 bzw. das Einlassventil 91 mit der Auswerte- und Steuereinheit 70 verbunden und werden von dieser in Abhängigkeit von vom Sensor 75 erfassten und ausgewerteten Messdaten angesteuert.

Nun folgen Beschreibungen im Hinblick auf der erfindungsgemäßen Bremsassistenzeinrichtung 100 zu Grunde liegende Ausgestaltungen des Anpassungsgefäßes 40 im Zusammenwirken mit dem Fluidwiderstandselements 50.

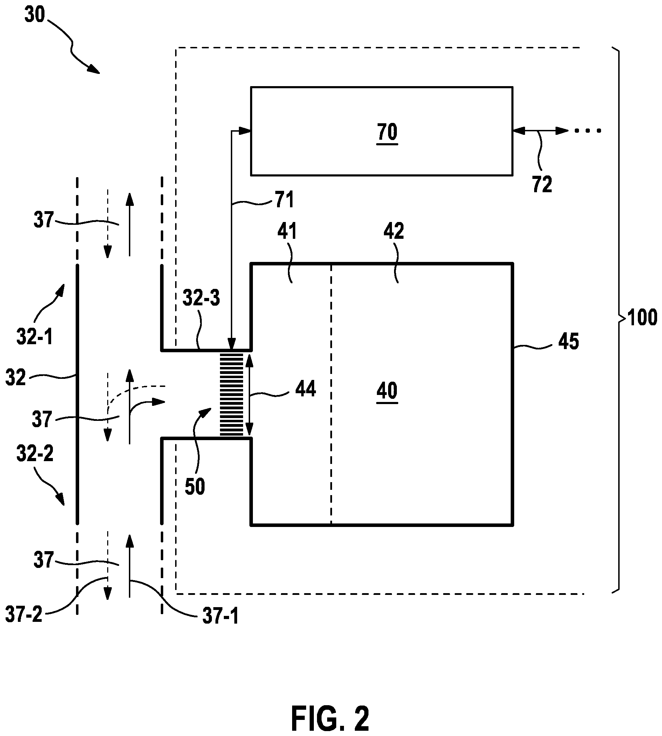

Zunächst zeigt Figur 2 in einer schematischen Darstellung eine allgemeine Ausführungsform der erfindungsgemäßen Bremsassistenzeinrichtung 100 im Zusammenwirken mit einer Bremsleitung 32 einer übergeordneten hydraulischen Bremsanlage 30.

Die Ausführungsform der erfindungsgemäßen Bremsassistenzeinrichtung 100 gemäß Figur 2 besteht dem Kern nach aus einem Anpassungsgefäß 40 mit einem Gehäuse 45 und einer Öffnung 44. Im Bereich der Öffnung 44 ist hier ein Fluidwiderstandselement 50 vorgesehen, welches die Öffnung 44 vollständig überspannt. Alternativ dazu kann das Fluidwiderstandselement 50 auch weiter in das Innere des Gehäuses 45 des Anpassungsgefäßes 40 hineinversetzt sein und dort, zum Beispiel an der gestrichelt markierten Position zur Unterteilung des Inneren des Gehäuses 45 und mithin des Anpassungsgefäßes 40 in ein erstes Anpassungskompartiment 41 und ein zweites Anpassungskompartiment 42 bewirken.

Das Anpassungsgefäß 40 ist über das Fluidwiderstandselement 50 mit der Leitung 32 der übergeordneten hydraulischen Bremsanlage 30 hydraulisch verbunden. Bei der Ausführungsform gemäß Figur 2 erfolgt dies über eine Abzweigungsleitung 32-3 aus der Bremsleitung 32, so dass diese in einen geber- oder reservoireseitigen Abschnitt 32-1 und einen nehmer- oder bremsseitigen Abschnitt 32-2 unterteilt wird.

Im Betrieb strömt in der Bremsleitung 32 das Bremsfluid 37, und zwar in einer Hinrichtung 37-1 und beim Betätigen der Bremsanlage 30, z.B. über einen Bremshebel 31, z.B. aus einem Geberzylinder 36, der auch als Reservoir bezeichnet werden kann und in den Figuren 11 bis 14 schematisch gezeigt ist, und in einer Rückrichtung 37-2 beim Lösen des Betätigens der Bremsanlage 30, z.B. beim Loslassen des Bremshebels 31.

Im Bereich des Einmündens oder Ausmündens der Abzweigungsleitung 32-2 wird dabei ein Teilstrom des Bremsfluids 37 abgezweigt oder beim Rückströmen ggf. dem Hauptstrom hinzugefügt. Dabei wird der Anteil an abgezweigtem Bremsfluid 37, welcher in Richtung auf das Anpassungsgefäß zugeführt wird, durch den Fluidwiderstand des Fluidwiderstandselements 50 behindert. In einem Extremfall, bei maximalem Widerstand, findet keine Aufteilung des Bremsfluids 37 in die Abzweigungsleitung 32-3 hinein statt. Die Bremsanlage 30 besitzt in diesem Fall die Bissigkeit oder Steifigkeit, wie sie in etwa bei einer nicht erfindungsgemäß modifizierten Bremsanlage vorherrschen würde. Bei minimalem Fluidwiderstand wäre dagegen das Aufteilungsverhältnis z.B. in etwa durch die Leitungsquerschnitte von eigentlicher Bremsleitung 32 und Abzweigungsleitung 32-3 bestimmt.

Für eine Steuerbarkeit der Bissigkeit oder Steifigkeit der erfindungsgemäßen Bremsanlage 30 ist es erforderlich, den Fluidwiderstand des Fluidwiderstandselements 50 einzustellen. Dies kann rein manuell erfolgen, automatisch über ein in seinen Kompressionseigenschaften von äußeren Bedingungen, zum Beispiel Temperatur, abhängiges Medium oder aber gesteuert über eine in Figur 2 dargestellte Auswerte- und Steuereinheit 70, die über eine erste Steuer- und Messleitung 71 Einfluss nehmen kann auf das Fluidwiderstandselement 50 in direkter Weise oder unter Zwischenschaltung eines - hier nicht dargestellten - Stellmechanismus oder dergleichen.

Zusätzlich können ein oder mehrere weitere Steuer- und Messleitungen 72 vorgesehen sein, die mit externen Aggregaten verbunden sind, zum Beispiel Sensoren, anderen Steuer- und Auswerteeinheiten und dergleichen, bei welcher Daten erfasst werden, die mit einer Bewertung zu einer entsprechenden Anpassung des Fluidwiderstandselements 50 über die Auswerte- und Steuereinheit 70 führt, und folglich auch zu einer Anpassung der Steifigkeit und Bissigkeit der gesamten Bremsanlage 30.

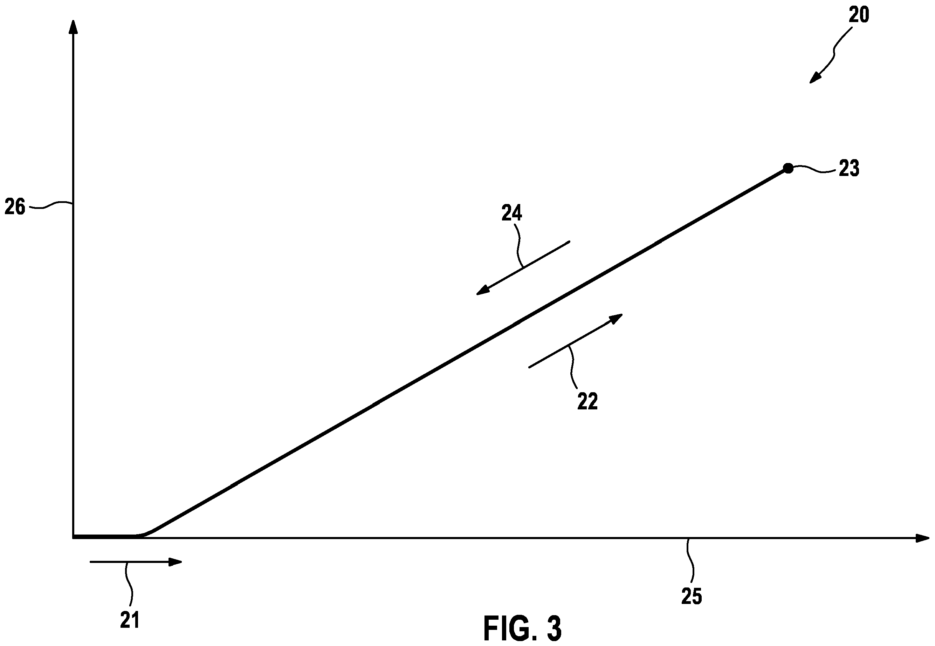

Figur 3 zeigt einen Graphen 20, bei welchem an der Abszisse 25 der Betätigungsweg oder die Betätigungskraft zum Betätigen einer Bremsanlage 30 und auf der Ordinate 26 entsprechend die ausgeübte Bremskraft oder die Bewegung des Bremselements als Funktion voneinander aufgetragen sind. Der Graph 20 zeigt das Hystereseverhalten beim Bremsvorgang, nämlich beginnend mit (i) einer ersten Phase 21, entsprechend einem Todweg bis zum Erreichen eines Bremspunkts oder Druckpunkts, einer zweiten Phase 22 mit einem ersten linearen Anstieg 22, bei welchem die ausgeübte Betätigungskraft und die bewirkte Bremskraft zueinander proportional sind, (iii) einer dritten Phase 23 des Loslassens und (iv) einer vierten Phase 24 eines im Wesentlichen linearen und in Hysterese verschobenen Rücklaufs des Bremsvorgangs.

Figur 3 zeigt in Form von Graphen 20-1 bis 20-3 den Verlauf der Phasen 22 mit linearem Anstieg beim Aufnehmen der Bremsfunktion gemäß Figur 3 für verschieden bissig oder steif eingestellte erfindungsgemäße Bremsanlagen 30. Dabei ist die Steigung der Spur des Graphen 20-1 nach Durchlaufen der Todstrecke 21 geringer, das Bremsen somit weniger bissig oder steif, als dies bei den nachfolgenden Spuren der Graphen 20-2 und 20-3 der Fall ist. Die Steigung der jeweiligen Phasen ist dabei jeweils direkt ein Maß für die Bissigkeit oder Steifigkeit der Bremse.

Die Figuren 5 bis 10 zeigen verschiedene Ausführungsformen der erfindungsgemäßen Bremsanpassungseinrichtung 100, bei welcher als Fluidwiderstandselement 50 jeweils eine Membran 51 eingesetzt wird, deren Vorderseite 51-1 der Bremsleitung 32 zugewandt, deren Rückseite 51-2 von der Bremsleitung 52 abgewandt ist und deren Rand 51-3 im Zusammenhang mit einer Membranaufhängung 52 entsprechend im Übergangsbereich zwischen Abzweigungsleitung 32-3 und Anpassungsgefäß 40 mit dessen Öffnung 44 angebracht ist.

Bei der Ausführungsform gemäß Figur 5 wird die Membran 51 oder Wand 51 von deren Rückseite 51-2 durch eine elastische Einrichtung 54, zum Beispiel in Form einer Feder, vorgespannt, wobei die Vorspannung der elastischen Einrichtung 54 durch eine entsprechende Vorspannungseinrichtung 58 eingestellt werden kann.

Dargestellt ist noch eine optionale Ausgleichsöffnung 46 im Gehäuse 45 des Anpassungsgefäßes 40, die für einen Volumenausgleich sorgt, wenn in diesem Bereich ein nicht oder nicht ausreichend kompressibles Medium verwendet wird.

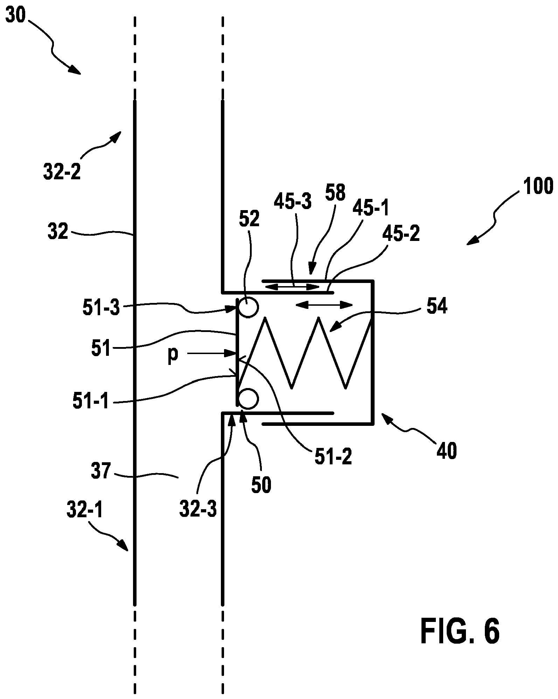

Figur 6 zeigt eine zur Figur 5 ähnliche Darstellung, bei welcher die Vorspanneinrichtung 58 zum Einrichten der Vorspannung des elastischen Elements 54 gebildet wird von einem ersten Gefäß- oder Gehäuseteil 45-1 als Hülse mit einem Schraubgewinde 45-3, an dessen Boden sich das Membran 51 gegenüberliegende Ende des elastischen Elements 54 abstützt. Durch verschieden tiefes Ein- und verschiedenes Herausschrauben am zweiten oder inneren Gefäß- oder Gehäuseteil 45-2 mittels des Gewindes 45-3 wird die komprimierte Länge des elastischen Elements 54 und damit der auf der Rückseite 51-2 der Membran 51 wirkende Druck durch die elastische Einrichtung variiert, und damit auch das Vermögen der Membran 51, vom Druck p des Bremsfluids 37 in der Bremsleitung 32 deformiert zu werden.

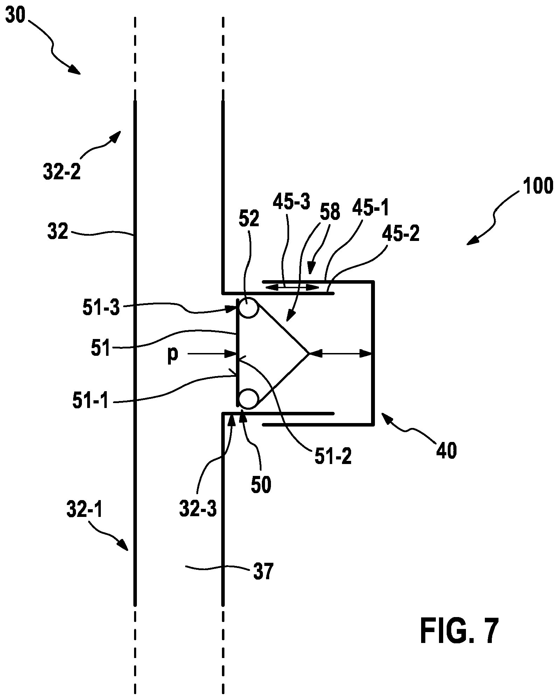

Bei der Ausführungsform gemäß Figur 7 wird die Membran 51 über deren Rand 51-3 und über die Aufhängung 52 durch einen Zug mittels der Vorspanneinrichtung 58 durch entsprechendes Ein- und Ausschrauben der Gehäuseteile 45-1 und 45-2 mittels des Gewindes 45- 3 vorgespannt.

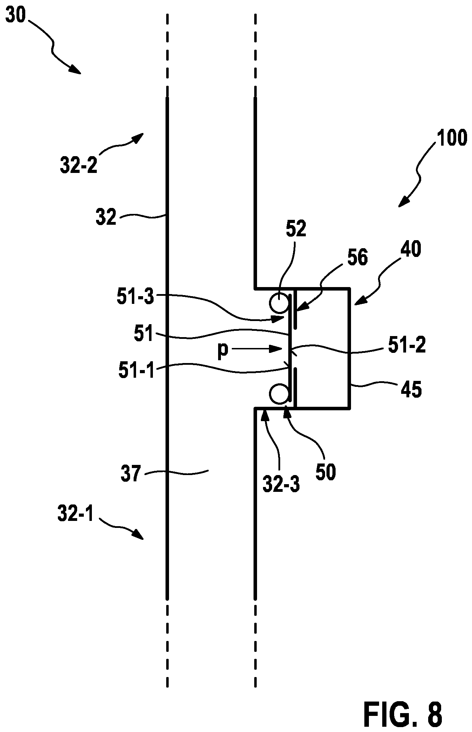

Bei der Ausführungsform gemäß Figur 8 ist auf der Rückseite 50-2 der Membran 51 eine Lochblende 56 vorgesehen, deren Lochöffnung in Bezug auf die Membran zentral angeordnet ist und deren Durchmesser variierbar ist. Je nach Größe der Öffnung der Lochblende 56 wird die Membran 51 an deren Rückseite 51-2 mehr oder weniger stark abgestützt und kann daher von der Vorderseite 51-1 her durch den Druck p Bremsfluids 37 in der Bremsleitung 32 unterschiedlich stark in Richtung auf das Anpassungsgefäß 40 zu komprimiert werden.

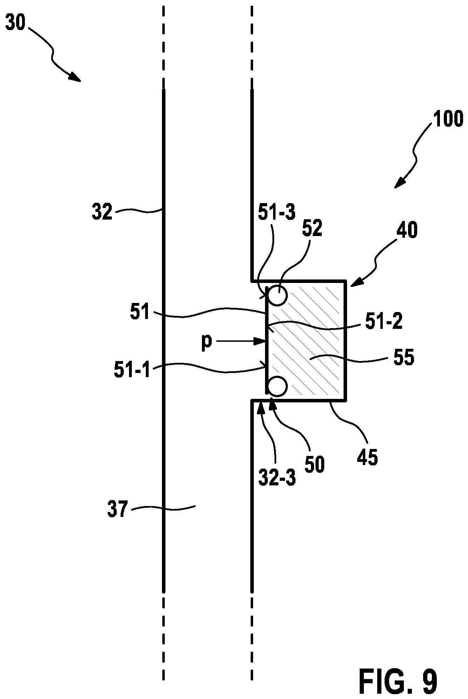

Bei der Ausführungsform gemäß Figur 9 befindet sich im Inneren des Anpassungsgefäßes 40 auf der Rückseite 51-3 der Membran 51 zugewandten Seite ein Anpassungsfluid 55, welches in seinem Volumen, seinem Druck und/oder seiner Kompressibilität einstellbar ist, um dem Druck p des Bremsfluids 37 in der Bremsleitung 32 einen variierbaren Gegendruck entgegen zu stellen, so dass auf diese Weise die Deformierbarkeit der Membran 51 von deren Vorderseite 51-1 und damit die Bissigkeit oder Steifigkeit des Bremsverhaltens der erfindungsgemäßen hydraulischen Bremsanlage 30 gemäß Figur 9 variierbar ist.

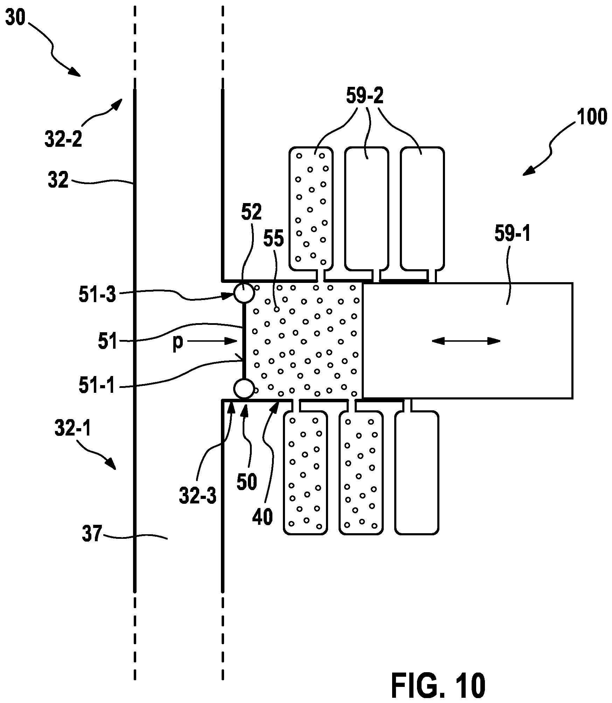

Bei der Ausführungsform gemäß Figur 10 werden über einen Kolben 59-1 verschiedene Volumina 59-2 durch Verschieben des Kolbens 59-1 im Anpassungsgefäß 40 angeboten, so dass auf diese Weise das Volumen und/oder die Kompressibilität des Anpassungsfluids 55, die Deformierbarkeit der Membran 51 und folglich die Bissigkeit oder Steifigkeit des Bremsverhaltens der erfindungsgemäßen hydraulischen Bremsanlage 30 gemäß Figur 10 variierbar sind.

Die Figuren 11 bis 14 zeigen in schematischer Ansicht verschiedene Ausführungsformen der erfindungsgemäßen Bremsanlage 30 unter Verwendung einer Ausführungsform der erfindungsgemäßen Bremsanpassungseinrichtung 100, also in verschiedenen Anwendungen, wobei die erfindungsgemäße Bremsanlage 30 jeweils mit einem oder als ein ABS-System 90 ausgebildet sein kann.

Diese Aspekte werden nachfolgend auch noch im Detail erläutert. Diese und weitere Merkmale und Eigenschaften der vorliegenden Erfindung werden an Hand der folgenden Darlegungen weiter erläutert:

Mit dem Begriff der Bissigkeit oder Steifigkeit einer Bremse 33 oder Bremsanlage 30 ist im Sinne der vorliegenden Erfindung das Ansprechverhalten der Bremse 33 oder Bremsanlage 30 während des Druckauf- und -abbaus gemeint.

In Figur 3, die den Bremskraftverlauf einer Fahrradbremse zeigt, kann darunter z.B. die Steigung im Bereich 22 verstanden werden, wobei an der Abszisse 25 Bremskraft oder der Weg am Geber 36 und an der Ordinate 26 der resultierende Bremsdruck aufgetragen sind.

Im Graphen der Figur 3 sind folgende Phasen zu erkennen:
(21) Weg bis zum Druckpunkt oder Bremspunkt,
(22) linearer Anstieg des Bremsdruckes mit zunehmender Kraft oder zunehmendem Betätigungsweg,
(23) Beginn/Starten des Loslassens und
(24) Rücklauf, welcher gegebenenfalls auch eine Hysterese beinhalten kann.

Viele und speziell ältere Menschen sind mit der Bissigkeit heutiger Bremsanlagen 30 und insbesondere Scheibenbremsen überfordert. In Notbremssituationen kann dies zu einem Überbremsen mit Sturzfolge führen. Eine einstellbare Aufweichung des Bremsverhaltens wäre wünschenswert:

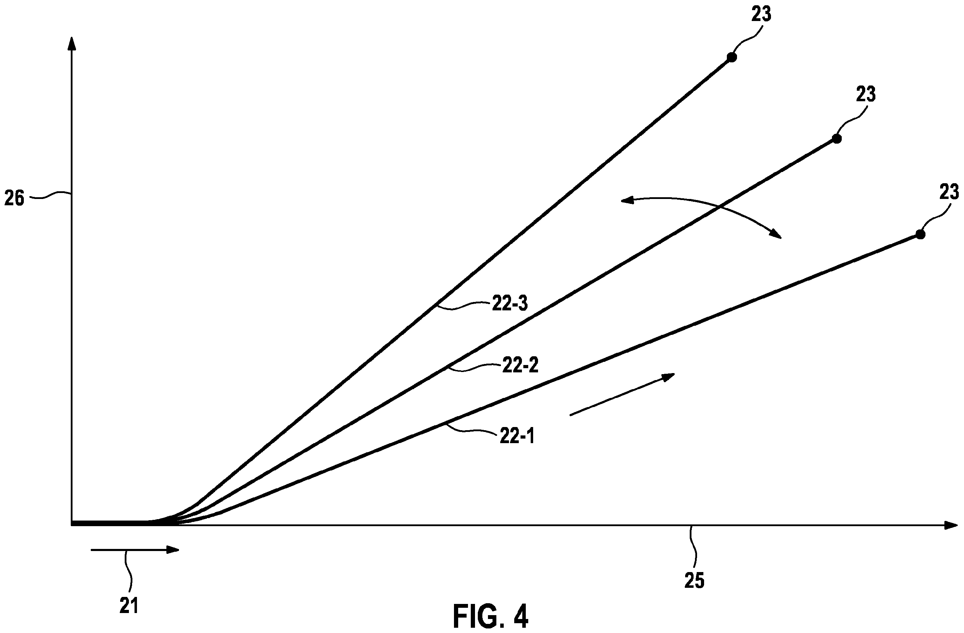

Figur 4 illustriert den Effekt der einstellbaren Bissigkeit.

Eine - gegebenenfalls variable - Aufweichung des Bremsverhaltens einer Bremsanlage 30 erweitert auch die Freiräume in Gestaltung und Materialwahl von Bremskomponenten. Damit können z.B. Einschränkungen bezüglich Einbauort eines ABS-Systems im Sinne der erfindungsgemäßen Bremsassistenzeinrichtung 100 reduziert werden, die dadurch begründet sein können, dass beispielsweise eine zu kurze Leitung zum Geber- oder Nehmerkolben mit einer entsprechend hohen Steifigkeit die ABS-Regelung ungünstig beeinflusst.

Bindet man die Steifigkeitsveränderung in eine Regelung ein, sind besondere Anwendungen möglich, z.B.:
- eine reduzierte Bissigkeit bei hohen Geschwindigkeiten,
- ein Ausgleich von temperaturabhängigen und/oder lebensdauerbedingten Steifigkeitsveränderungen der Leitungen 32, der Bremsflüssigkeit 37, insbesondere für bremsregelnde Systeme wie ABS,
- Anwendungen mit einer sehr schnellen Regelung, z.B. im 10ms-Bereich, mit Einbeziehung der Steifigkeitsregelung in die direkte ABS-Regelung, um z.B. das begrenzte Reservoir pumpenloser ABS-Systeme 90 besser zu nutzen, und
- andere neuartige und vereinfachte ABS-Systeme.

Ein Erfindungsgegenstand ist ein in ein Bremsleitungssystem 32 als Bremsassistenzeinrichtung 100 integrierbares Element, welches in der Lage ist, ein bestimmtes und einstellbares Volumen des Bremsfluids 37 aus der Bremsleitung 32 aufzunehmen und damit den Druck im System und insbesondere in der Bremsleitung 32 zu reduzieren, mit der Besonderheit, dass der Druck, der notwendig ist, um das Volumen eines Anpassungsgefäßes 40 der Bremsanpassungseinrichtung 100 zu befüllen, einstellbar ist, gegebenenfalls über einen einstellbaren Fluidwiderstand, der zum Befüllen überwunden werden muss.

Dies erlaubt auch eine Regelung direkt auf dem Druck und nicht nur indirekt via viskositäts- und druckabhängigem Volumenstrom. Dies ist vorteilhaft für die Funktionalität der erfindungsgemäßen Bremsassistenzeinrichtung 100, zum Beispiel im Sinne eines ABS-Systems, insbesondere bei begrenztem Regelvolumen und/oder pumpenlosen ABS-Systemen.

Ein Ausführungsbeispiel besteht aus einem Zylinder als Gehäuse 45 des Anpassungsgefäßes 40 mit beweglicher Membran 51 als Fluidwiderstandselements 50 auf einem Federelement 54, ähnlich einem Druckabbaureservoir eines ABS-Systems, mit einer zusätzlichen Vorspannmöglichkeit 58 des Federelements 54, wie dies in Figur 5 gezeigt ist. Figur 6 zeigt ein Ausführungsbeispiel mit Schraubgewinde, d.h. das Anpassungsgefäß 45 besteht aus zwei miteinander über ein Gewinde 45-3 verschraubbaren Gehäuseteilen 45-1, 45-2.

Ein weiteres Ausführungsbeispiel zeigt Figur 7. Eine Membran 51 oder Wand 51 ist ausgebildet mit veränderbarer Steifigkeit, beispielsweise mit einer Spannvorrichtung 58 oder in Figur 8 mit einer dahinter liegenden variablen Lochblende 56.

Alternativ kann sich gemäß Figur 9 hinter einer Membran 51 ein Medium 55 mit einstellbarer Kompressibilität befinden.

Als Medien 55 mit einstellbarer Kompressibilität sind beispielsweise (smarte) Hydrogele denkbar. Diese können u.a. auf elektrische Stimuli ihr Volumen und/oder ihre Kompressibilität ändern. Hydrogele mit steuerbarer Volumenänderung könnten auch genutzt werden, um im Ausführungsbeispiel der Figur 3 als verstellbare Vorspannung der Feder 54 zu fungieren. Denkbar als Medium 55 mit einstellbarer Kompressibilität im Ausführungsbeispiel nach Figur 9 wäre auch ein Medium mit Gasblase, deren Kompressibilität durch lokales Erhitzen verändert wird.

Als weitere Variante des Ausführungsbeispiels nach Figur 9 ist eine Gasblase mit mechanisch verstellbarem Volumen denkbar, beispielsweise durch eine ventilgesteuerte Hintereinanderschaltung mehrerer einzelner Gasvolumen, z.B. gemäß Figur 10. Hier wird also ein gasförmiges Medium mit veränderlichem Gasvolumen verwendet, wodurch die Kompressibilität gesteuert werden kann

### Applikationen für manuelle Einstellung

Bei den Ausführungsbeispielen der Figuren 1 bis 10 können die Bremsassistenzeinrichtung 100 und insbesondere das Anpassungsgefäß 40 - gegebenenfalls auch nachträglich - in jede Bremsanlage 30 integriert werden, um die Bissigkeit des Betriebs der Bremse 33 anzupassen und zu erhöhen oder zu senken, je nach Ausgangslage, zum Beispiel werksseitig mittiger Einstellung.

Die Bremsassistenzeinrichtung 100 mit dem Verstellen der Bissigkeit kann sowohl separat in die Bremsleitung 32 montiert als auch in der Bremsbetätigungseinrichtung (Bremshebel 31) oder in die Bremskolbengarnitur integriert werden. Auch könnten mit solchen Varianten die gewünschte Grundsteifigkeit des Leitungssystems für eine Bremsassistenzfunktion manuell eingestellt werden.

Es bieten sich verschiedene Anwendungen einer manuell verstellbaren Bremsassistenzeinrichtung 100 an, wie dies in den Figuren 11 und 13 grundsätzlich gezeigt ist.

Ein Aufbau gemäß Figur 11 in manueller Form - d.h. ohne Steuerung 70 - ist ja zwar zunächst nur eine Bissigkeitseinstellung, bietet aber selbst schon eine Art Bremsassistenzfunktion an, indem sie bei zu starke Bremsungen dies, z.B. weil die Bremse weicher eingestellt ist.

### Anwendungen bei langsamer gesteuerter Regelung

Die nachfolgend beschriebenen Ausführungsbeispiele zeichnen sich dadurch aus, dass die Steifigkeit von einer Auswerte- und Steuereinheit 70 eingestellt wird. Dies ist in den Ausführungsbeispielen der Figuren 3 bis 9 einfach vorstellbar durch entsprechende Aktuatorik, z.B. über Schrittmotor, Piezoelement, Spulen, oder über eine Flüssigkeit mit einstellbarer Kompressibilität.

Mit eher langsamer Aktuatorik - z.B. im Sekundenbereich für den vollen Verfahrweg - lassen sich Anwendungen realisieren wie z.B.
- eine reduzierte Bissigkeit bei hohen Geschwindigkeiten (unabhängig von einem sonstigen ABS), um speziell bei hohen Geschwindigkeiten ein Überbremsen - z.B. durch Panikbremse und ungewohnte Bissigkeit der Bremsen 33 zu vermeiden,
- ein Ausgleichen von z.B. temperaturabhängigen oder lebensdauerbedingten Steifigkeitsveränderungen der Leitungen und/oder der Bremsflüssigkeit, insbesondere bei bremsregelnden Systemen wie ABS-Systemen 90.

Die Anwendungen in den Figuren 11 bis 14 können bei langsamer gesteuerter Regelung erfolgen.

Gemäß der Ausführungsform nach Figur 13 ist zum Beispiel eine geschwindigkeits- und/oder temperaturabhängige Steifigkeitsregelung für ein bestehendes ABS möglich.

Dabei kann bei Figur 11 eine vom Fahrzeug gesteuerte Veränderung der Bremssteifigkeit erfolgen, z.B. in Abhängigkeit von der Geschwindigkeit.

Gemäß den Figuren 12 bis 14 kann an eine Kombination mit einem herkömmlichen ABS-System 90 gedacht werden, wobei durch die erfindungsgemäße Bremsanpassungseinrichtung 100 mit variabler Steifigkeit eine bestmögliche Ausnutzung eines gegebenenfalls begrenzten Regelvolumens des ABS-Systems 90 erfolgt.

Die Öffnungszeit eines Auslassventils 92 - zum Beispiel gemäß der Darstellung in Figur 14 - ist nicht trivial festzulegen. Einerseits muss genug Druck abgebaut werden, damit die Blockade gelöst oder verhindert wird. Andererseits sollte nicht mehr Volumen des Bremsfluids 37 als nötig fließen, wenn man nur ein begrenztes Reservoir hat.

Wenn ein Drucksensor vorhanden ist, kann die Öffnungszeit variiert werden.

Allerdings sind die minimalen Ventilöffnungszeiten begrenzt, insbesondere wenn nur begrenzte Ströme zur Verfügung steht. Eine zusätzliche Stellgröße in Form einer erfindungsgemäß - auch dynamisch - veränderbaren Steifigkeit des Akkumulators im Sinne des Anpassungsgefäßes 40 ist daher vorteilhaft, um das begrenzte Volumen, wie bei einem pumpenlosen System gegeben, bestmöglich für eine lange Regelfähigkeit während eines Bremsvorgangs zu nutzen.

Dafür man kann ein herkömmlich bestehender Akkumulator ersetzt werden durch ein Anpassungsgefäß 40 einer erfindungsgemäß ausgebildeten Bremsassistenzeinrichtung 100 ersetzt werden, wie dies Figur 14 angedeutet ist.

Die Steifigkeit der Membran 51 - nun als Akkumulatormembran aufgefasst - kann z.B. in Abhängigkeit des anliegenden Druckes und der Temperatur geregelt werden.

### Anwendungen bei schneller gesteuerter Regelung

Besteht die Möglichkeit einer sehr schnellen Regelung - z.B. im 10ms-Bereich - so ist eine Einbeziehung der Steifigkeitsregelung mittels einer erfindungsgemäßen Bremsassistenzeinrichtung 100 in einer direkte ABS-Regelung denkbar.

Dies ist einerseits in der oben diskutierten Variante gemäß den Figuren 13 und 14 vorteilhaft, um dynamisch den Volumenfluss während einer Regelung zu beeinflussen, und zwar in Kombination mit der Schaltung des Auslassventils 92, um damit sowohl eine optimale Regelung als auch eine optimale Ausnutzung des zur Verfügung stehenden Volumens zu erreichen.

Falls in der Variante gemäß Figur 14 die Aktuatorik des variablen Volumenreservoirs des Anpassungsgefäßes 40 entsprechend stark ausgelegt ist, ist es auch denkbar, dass die erfindungsgemäße Bremsassistenzeinrichtung 100 Bremsflüssigkeit 37 auch während des Bremsvorgangs zum Geberzylinder 36 zurückpumpt, also gegen den vom Fahrer erzeugten Bremsdruck, um im Anschluss erneut wertvolles Regelvolumen zur Verfügung stellen zu können.

Neben seiner Funktion als Druckstellelement bei geschlossenem Einlassventil 91 mit Regelung um den besten Druckregelpunkt herum und ohne weiteren Volumenverlust kann das Anpassungsgefäß 40 der erfindungsgemäßen Bremsassistenzeinrichtung 100 somit auch als Pumpe fungieren.

Damit sind unendlich lange Regelungen möglich. Ferner bestünde auch die Möglichkeit, mit einem vergleichsweise kleinen Regelvolumen viel Druck aus dem System zu nehmen, beispielsweise wenn der Reibwert des Untergrunds während des Bremsvorgangs plötzlich abnimmt - zum Beispiel im Sinne eines negativen µ-Sprungs - und der ursprünglich hohe Druckregelpunkt massiv reduziert werden muss, was herkömmlicherweise nur mit einem entsprechend großen Volumen möglich ist.

Mit der erfindungsgemäßen Bremsassistenzeinrichtung 100 ist mit einer schnellen Regelbarkeit der Steifigkeit auch ein vereinfachtes ABS-System mit nur einem Ventil 91 denkbar, wie dies in Figur 12 gezeigt ist.

Figur 12 zeigt also in einer Bremsanlage 30 ein schlankes ABS-System mit nur einem Ventil, nämlich im Sinne eines Einlassventils 91. Ob Volumen entzogen wird oder nicht, wird hier über die Steifigkeit des als Akkumulator wirkenden Anpassungsgefäßes 40 der erfindungsgemäßen Bremsassistenzeinrichtung 100 eingestellt.

Wie beim herkömmlichen ABS gibt es ein im Normalbetrieb geöffnetes Einlassventil 91. Im Normalbetrieb ist die gezeigte Akkumulatorkammer der Bremsanpassungseinrichtung 100 leer und maximal steif eingestellt. Es bietet sich sogar eine Parallelnutzung für eine statische Steifigkeitseinstellung an.

Wenn eine kritische Fahrsituation, z.B. eine Vorderradblockade, drohender Überschlag usw., droht, koppelt das Einlassventil 91 wie gewohnt den Fahrer ab, damit nicht noch mehr Druck ins System kommt. Wieviel Druck dem System entnommen wird, wird über die nun einzustellende, reduzierte Steifigkeit der erfindungsgemäßen Bremsanpassungseinrichtung 100 eingestellt. Dies muss im 10ms-Bereich über den vollen Hub möglich sein, zumindest kurzzeitig.

Der darauffolgende Druckaufbau, mit dem sich wieder an die Blockadesituation herangetastet wird, kann auch über den Akkumulator der Bremsanpassungseinrichtung 100 geleistet werden. Der Fahrer bleibt entkoppelt.

Damit wird wertvolles Volumen zurückgewonnen. Der Druckaufbau kann jedoch nur im Rahmen dessen, was vorher hineingesteckt wurde, geschehen. Ein Druckaufbau im normalen Fahrbetrieb ist somit erstmal nicht möglich wenn die Ausgangsstellung diejenige mit dem maximalen Fluidwiderstand ist. Dies ist aus Sicherheitsgründen begrüßenswert.

Löst der Fahrer die Bremse 33, geht sofort aller Druck aus dem System. Dies wäre von der Steuerung zu erkennen, weshalb ein zumindest simpler Drucksensor vorteilhaft sein könnte, um den Ausgangszustand des variablen Akkumulators wieder herzustellen.

Der Vorteil dieses Systems ist - neben der Tatsache, dass weniger Komponenten gebraucht werden - dass über die variable Steifigkeit direkt auf Druck geregelt werden kann. Aktuell wird über Schaltzeiten ein Volumenstrom geregelt, der indirekt einen Druckabbau mit sich bringt, der aber abhängig ist vom aktuell herrschenden Druck, von der Viskosität der Bremsflüssigkeit, die wiederum stark temperaturabhängig ist, etc. Zudem sind die technisch möglichen Schaltzeiten der Ventile begrenzt.

## Patentansprüche

1. Bremsassistenzeinrichtung (100) für eine hydraulische Bremsanlage (30), für ein mit Muskelkraft und zusätzlich mit oder ohne Motorkraft antreibbares
Fahrzeug (1), Fahrrad, Elektrofahrrad, eBike und/oder Pedelec,
- mit einem Anpassungsgefäß (40) und einem Fluidwiderstandselement (50),
- wobei das Anpassungsgefäß (40) über das Fluidwiderstandselement (50) mit einer Bremsleitung (32), einem Geber (36) und/oder einem Nehmer der Bremsanlage (30) hydraulisch verbindbar ist und
- wobei das Fluidwiderstandselement (50) für einen anpassbaren Fluidübertritt zwischen Bremsleitung (32), dem Geber (36) bzw. dem Nehmer und Anpassungsgefäß (40) mit einem steuerbar anpassbaren Fluidwiderstand gegenüber einem Bremsfluid (37) in der Bremsleitung (32) ausgebildet ist,
**dadurch gekennzeichnet dass**
das Anpassungsgefäß (40) als Akkumulator der Bremsassistenzeinrichtung (100) ausgebildet ist.

2. Bremsassistenzeinrichtung (100) nach Anspruch 1, wobei die Bremsanlage (30) einen Bremshebel (31) aufweist, wobei durch die Steuerung des
Fluidwiderstands durch die Variation der Steifigkeit des Fluidwiderstandselementes der bei der Bremsbetätigung des Bremshebels (31)
erzeugte Druck im Bremssystem verändert wird.

3. Bremsassistenzeinrichtung (100) nach Anspruch 2, **dadurch gekennzeichnet, dass** durch die Steuerung des Fluidwiderstands der Druck im Bremssystem geregelt wird.

4. Bremsassistenzeinrichtung (100) nach einem der vorherigen Ansprüche, bei welcher das Anpassungsgefäß (40) eingerichtet ist, über eine Abzweigungsleitung (32-3) und eine Einmündung (32-4) zwischen einem geber- oder reservoirseitig gelegenen Abschnitt (32-1) der Bremsleitung (32) und einem nehmer- oder bremsseitig gelegenen Abschnitt (32-2) der Bremsleitung (32) hydraulisch verbunden zu sein.

5. Bremsassistenzeinrichtung (100) nach einem der vorherigen Ansprüche, mit einem Einlassventil (91), welches insbesondere
(i) vom im normalen Betrieb offenen oder stromlos offenen Typ ausgebildet und/oder
(ii) eingerichtet ist, einen oder den geberseitig gelegenen Abschnitt (32-1) der Bremsleitung (32) und einen oder den nehmer- oder bremsseitig gelegenen Abschnitt (32-2) der Bremsleitung (32) steuerbar hydraulisch zu verbinden und zu trennen.

6. Bremsassistenzeinrichtung (100) nach einem der Ansprüche 1 bis 5, bei welcher das Anpassungsgefäß (40) über eine Abzweigungsleitung (32-3) und eine Einmündung (32-4) zwischen einem geberseitig gelegenen Abschnitt (93-3) einer Umgehungsleitung (93) eines Einlassventils (91) und einem nehmer- oder bremsseitig gelegenen Abschnitt (93-2, 93-1) der Umgehungsleitung (93) mit der Umgehungsleitung (93) hydraulisch verbunden ist, insbesondere in zu einem Auslassventil (92) geberseitig vorgeschalteter Weise.

7. Bremsassistenzeinrichtung (100) nach einem der vorangehenden Ansprüche,
mit einer Auswerte- und Steuereinheit (70), welche zur Steuerung des Zustands des Fluidwiderstandselements (50) ausgebildet ist, insbesondere über eine Steuerung des Wertes des Fluidwiderstands des Fluidwiderstandselements (50), insbesondere auf der Grundlage von mindestens einem Sensor (75) erfasster Werte.

8. Bremsassistenzeinrichtung (100) nach einem der vorangehenden Ansprüche,
bei welcher das Fluidwiderstandselement (50) eine Membran (51) oder Wand (51) aufweist, welche eine Öffnung (44) des Anpassungsgefäßes (40) für einen Fluiddurchtritt verschließt und/oder das Anpassungsgefäß (40) in zwei voneinander getrennte Kompartimente (41, 42) unterteilt.

9. Bremsassistenzeinrichtung (100) nach Anspruch 8, bei welcher
- die Membran (51) oder Wand (51) eine variierbare Steifigkeit aufweist und
- welcher die variierbare Steifigkeit der Membran (51) oder Wand (51) insbesondere bewirkt wird durch:
- eine variierbare Elastizität, innere Beweglichkeit, insbesondere Dehnbarkeit und/oder Biegbarkeit, und/oder äußere Verschiebbarkeit,
- eine variierbare Vorspannung einer die Membran (51) oder Wand (51) von einer Rückseite (51-2) der Membran (51) oder Wand (51) unterstützenden elastischen Einrichtung (54), insbesondere einer Feder,
- eine Unterstützung der Membran (51) oder Wand (51) von einer Rückseite (51-3) durch ein Anpassungsfluid (55) entsprechend einer variierbaren Kompressibilität, entsprechend einem variierbaren Druck und/oder entsprechend einem variierbaren Volumen,
- eine Unterstützung der Membran (51) oder Wand (51) von einer Rückseite (51-3) durch eine sich von einem Rand (51-3) der Membran (51) oder Wand (51) her sich erstreckenden Lochblende (56) entsprechend einem variierbaren Durchmesser des Lochs,
- eine über eine Aufhängung (52) der Membran (51) oder Wand (51) - insbesondere über deren Rand (51-3) - aufprägte entsprechend variierbare Zugspannung
oder deren beliebige Kombination.

10. Bremsassistenzeinrichtung (100) nach einem der vorangehenden Ansprüche,
bei welcher das Fluidwiderstandselement (50) ein Durchströmungselement aufweist, welches eine Öffnung (44) des Anpassungsgefäßes (40) für einen Fluiddurchtritt verschließt und/oder das Anpassungsgefäß (40) in zwei voneinander getrennte Kompartimente (41, 42) unterteilt und welches einen variierbaren Strömungswiderstand aufweist, insbesondere über einen entsprechend variierbaren effektiven Strömungsquerschnitt.

11. Hydraulische Bremsanlage (30) für ein mit Muskelkraft und zusätzlich mit oder ohne Motorkraft antreibbares Fahrzeug (1), Fahrrad, Elektrofahrrad, eBike und/oder Pedelec, mit:
- einer Bremse (33),
- einer Bremsleitung (32) zur hydraulischen Verbindung mit der Bremse (33) über ein Bremsfluid (32) und
- einer Bremsassistenzeinrichtung (100) nach einem der Ansprüche 1 bis 10, welche mit der Bremsleitung (32), einem Geber (36) und/oder einem Nehmer über das Fluidwiderstandselement (50) der Bremsassistenzeinrichtung (100) hydraulisch verbunden ist,
bei welcher das Anpassungsgefäß (40) insbesondere mit der Bremsleitung (32), einer Umgehungsleitung (93), dem Geber (36) und/oder dem Nehmer hydraulisch verbunden ist, vorzugsweise über eine Abzweigungsleitung (32-3), zum Beispiel zwischen einem geberseitig gelegenen Abschnitt (32-1) der Bremsleitung (32) oder der Umgehungsleitung (93) und einem nehmer- und bremsseitig gelegenen Abschnitt (32-2; 93-1) der Bremsleitung (32) bzw. der Umgehungsleitung (93).

12. Mit Muskelkraft und zusätzlich mit oder ohne Motorkraft antreibbares Fahrzeug (1) und
insbesondere Fahrrad, Elektrofahrrad, eBike oder Pedelec, mit:
- mindestens einem Rad (9-1, 9-2) und
- einer Bremsanlage (30) nach Anspruch 11 zum Bremsen des mindestens einen Rades (9-1, 9-2).

## Claims

1. Brake assistance device (100) for a hydraulic brake system (30), for a vehicle (1), bicycle, electric bicycle, eBike and/or pedelec which can be driven with muscle power and additionally with or without motor power,
- with an adapter vessel (40) and a fluid resistance element (50),
- it being possible for the adapter vessel (40) to be connected hydraulically via the fluid resistance element (50) to a brake line (32), a master (36) and/or a slave of the brake system (30), and
- the fluid resistance element (50) being configured for an adaptable fluid transfer between the brake line (32), the master (36) and/or the slave and the adapter vessel (40) with a controllably adaptable fluid resistance with respect to a brake fluid (37) in the brake line (32),
**characterized in that**
the adapter vessel (40) is configured as an accumulator of the brake assistance device (100).

2. Brake assistance device (100) according to Claim 1, the brake system (30) having a brake lever (31), the pressure which is generated in the brake system in the case of the brake actuation of the brake lever (31) being changed by way of the control of the fluid resistance by way of the variation of the stiffness of the fluid resistance element.

3. Brake assistance device (100) according to Claim 2, **characterized in that** the pressure in the brake system is regulated by way of the control of the fluid resistance.

4. Brake assistance device (100) according to one of the preceding claims, in the case of which the adapter vessel (40) is set up to be connected hydraulically via a branch line (32-3) and a junction (32-4) between a master-side or reservoir-side section (32-1) of the brake line (32) and a slave-side or brake-side section (32-2) of the brake line (32).

5. Brake assistance device (100) according to one of the preceding claims, with an inlet valve (91) which, in particular,
(i) is of normally open type configuration, and/or
(ii) is set up to controllably connect and disconnect a or the master-side section (32-1) of the brake line (32) and a or the slave-side or brake-side section (32-2) of the brake line (32) hydraulically.

6. Brake assistance device (100) according to one of Claims 1 to 5, in the case of which the adapter vessel (40) is hydraulically connected via a branch line (32-3) and a junction (32-4) between a master-side section (93-3) of a bypass line (93) of an inlet valve (91) and a slave-side or brake-side section (93-2, 93-1) of the bypass line (93) to the bypass line (93), in particular in a way which is connected upstream on the master side with respect to an outlet valve (92).

7. Brake assistance device (100) according to one of the preceding claims, with an evaluation and control unit (70) which is configured to control the state of the fluid resistance element (50), in particular via a control of the value of the fluid resistance of the fluid resistance element (50), in particular on the basis of values detected by at least one sensor (75).

8. Brake assistance device (100) according to one of the preceding claims, in the case of which the fluid resistance element (50) has a diaphragm (51) or wall (51) which closes an opening (44) of the adapter vessel (40) for a fluid passage and/or divides the adapter vessel (40) into two compartments (41, 42) which are separated from one another.

9. Brake assistance device (100) according to Claim 8, in the case of which
- the diaphragm (51) or wall (51) has a variable stiffness, and
- which brings about the variable stiffness of the diaphragm (51) or wall (51), in particular, by way of:
- a variable elasticity, inner movability, in particular extensibility and/or bendability, and/or outer displacement capability,
- a variable prestress of an elastic device (54), in particular a spring, which supports the diaphragm (51) or wall (51) from a rear side (51-2) of the diaphragm (51) or wall (51),
- a support of the diaphragm (51) or wall (51) from a rear side (51-3) by way of an adapter fluid (55) in accordance with a variable compressibility, in accordance with a variable pressure, and/or in accordance with a variable volume,
- a support of the diaphragm (51) or wall (51) from a rear side (51-3) by way of a perforated sheet (56) which extends from an edge (51-3) of the diaphragm (51) or wall (51) in accordance with a variable diameter of the hole,
- am accordingly variable tensile stress which is imparted via a mounting (52) of the diaphragm (51) or wall (51), in particular via the edge (51-3) thereof,
or any desired combination thereof.

10. Brake assistance device (100) according to one of the preceding claims, in the case of which the fluid resistance element (50) has a throughflow element which closes an opening (44) of the adapter vessel (40) for a passage of fluid and/or divides the adapter vessel (40) into two compartments (41, 42) which are separated from one another, and which has a variable flow resistance, in particular via a correspondingly variable effective flow cross section.

11. Hydraulic brake system (30) for a vehicle (1), bicycle, electric bicycle, eBike and/or pedelec which can be driven with muscle power and additionally with or without motor power, with:
- a brake (33),
- a brake line (32) for hydraulic connection to the brake (33) via a brake fluid (32), and
- a brake assistance device (100) according to one of Claims 1 to 10 which is connected hydraulically to the brake line (32), a master (36) and/or a slave via the fluid resistance element (50) of the brake assistance device (100),
in the case of which hydraulic brake system (30) the adapter vessel (40) is connected hydraulically, in particular, to the brake line (32), a bypass line (93), the master (36) and/or the slave, preferably via a branch line (32-3), for example between a master-side section (32-1) of the brake line (32) or the bypass line (93) and a slave-side and brake-side section (32-2; 93-1) of the brake line (32) or the bypass line (93).

12. Vehicle (1), and, in particular, bicycle, electric bicycle, eBike and/or pedelec, which can be driven with muscle power and additionally with or without motor power, with:
- at least one wheel (9-1, 9-2), and
- a brake system (30) according to Claim 11 for braking the at least one wheel (9-1, 9-2).

## Revendications

1. Dispositif d'aide au freinage (100) pour une installation de freinage hydraulique (30), pour un véhicule (1), une bicyclette, un vélo électrique, un eBike et/ou un Pedelec pouvant être entraînés avec une force musculaire ainsi qu'en outre avec ou sans force motorisée,
- comprenant un boîtier adaptateur (40) et un élément résistant au passage de fluide (50),
- le boîtier adaptateur (40) pouvant être connecté hydrauliquement par le biais de l'élément résistant au passage de fluide (50) à une conduite de frein (32), un émetteur (36) et/ou un récepteur de l'installation de freinage (30) et
- l'élément résistant au passage de fluide (50) étant réalisé pour un passage de fluide adaptable entre la conduite de frein (32), l'émetteur (36) ou le récepteur et le boîtier adaptateur (40) avec une résistance au passage de fluide adaptable de manière commandable par rapport à un fluide de frein (37) dans la conduite de frein (32),
**caractérisé en ce que**
le boîtier adaptateur (40) est réalisé sous forme d'accumulateur du dispositif d'aide au freinage (100).

2. Dispositif d'aide au freinage (100) selon la revendication 1, dans lequel l'installation de freinage (30) présente un levier de frein (31), la pression dans le système de frein générée lors de l'actionnement du frein du levier de frein (31) étant modifiée par la commande de la résistance au passage de fluide par la variation de la rigidité de l'élément résistant au passage de fluide.

3. Dispositif d'aide au freinage (100) selon la revendication 2, **caractérisé en ce que** la pression dans le système de frein est réglée par la commande de la résistance au passage de fluide.

4. Dispositif d'aide au freinage (100) selon l'une quelconque des revendications précédentes, dans lequel le boîtier adaptateur (40) est prévu pour être connecté hydrauliquement par le biais d'une conduite de dérivation (32-3) et d'une embouchure (32-4) entre une portion (32-1) de la conduite de frein (32) située du côté de l'émetteur ou du côté du réservoir et une portion (32-2) de la conduite de frein (32) située du côté du récepteur ou du côté du frein.

5. Dispositif d'aide au freinage (100) selon l'une quelconque des revendications précédentes, comprenant une soupape d'entrée (91) qui, en particulier,
(i) est réalisée sous forme ouverte pendant le fonctionnement normal ou ouverte en l'absence de courant et/ou
(ii) qui est prévue pour relier et séparer hydrauliquement de manière commandable une portion ou la portion (32-1) de la conduite de frein (32) située du côté de l'émetteur et une portion ou la portion (32-2) de la conduite de frein (32) située du côté du récepteur ou du côté du frein.

6. Dispositif d'aide au freinage (100) selon l'une quelconque des revendications 1 à 5, dans lequel le boîtier adaptateur (40) est connecté hydrauliquement par le biais d'une conduite de dérivation (32-3) et d'une embouchure (32-4) entre une portion (93-3) d'une conduite de contournement (93) d'une soupape d'entrée (91), située du côté de l'émetteur et une portion (93-2, 93-1) de la conduite de contournement (93) située du côté du récepteur ou du côté du frein, à la conduite de contournement (93), en particulier de manière montée en amont d'une soupape de sortie (92) du côté de l'émetteur.

7. Dispositif d'aide au freinage (100) selon l'une quelconque des revendications précédentes, comprenant une unité d'analyse et de commande (70) qui est réalisée pour commander l'état de l'élément résistant au passage de fluide (50), en particulier par le biais d'une commande de la valeur de la résistance au passage de fluide de l'élément résistant au passage de fluide (50), en particulier sur la base de valeurs détectées par au moins un capteur (75).

8. Dispositif d'aide au freinage (100) selon l'une quelconque des revendications précédentes,
dans lequel l'élément résistant au passage de fluide (50) présente une membrane (51) ou une paroi (51) qui ferme une ouverture (44) du boîtier adaptateur (40) pour un passage de fluide et/ou qui divise le boîtier adaptateur (40) en deux compartiments séparés l'un de l'autre (41, 42).

9. Dispositif d'aide au freinage (100) selon la revendication 8, dans lequel
- la membrane (51) ou la paroi (51) présente une rigidité variable et
- la rigidité variable de la membrane (51) ou de la paroi (51) est obtenue notamment par :
- une élasticité variable, une mobilité interne, en particulier une capacité d'étirage et/ou de flexion, et/ou une capacité de déplacement extérieure,
- une précontrainte variable d'un dispositif élastique (54) supportant la membrane (51) ou la paroi (51) depuis un côté arrière (51-2) de la membrane (51) ou de la paroi (51), en particulier d'un ressort,
- un support de la membrane (51) ou de la paroi (51) depuis un côté arrière (51-3) par un fluide d'adaptation (55) de manière correspondant à une compressibilité variable, de manière correspondant à une pression variable et/ou de manière correspondant à un volume variable,
- un support de la membrane (51) ou de la paroi (51) depuis un côté arrière (51-3) par un diaphragme perforé (56) s'étendant depuis un bord (51-3) de la membrane (51) ou de la paroi (51) de manière correspondant à un diamètre variable du trou,
- une contrainte de traction variable de manière correspondante appliquée par le biais d'un rideau (52) de la membrane (51) ou de la paroi (51) - notamment par le biais de son bord (51-3),
ou par une combinaison quelconque de ceux-ci.

10. Dispositif d'aide au freinage (100) selon l'une quelconque des revendications précédentes,
dans lequel l'élément résistant au passage de fluide (50) présente un élément d'écoulement qui ferme une ouverture (44) du boîtier adaptateur (40) pour un passage de fluide et/ou qui divise le boîtier adaptateur (40) en deux compartiments séparés l'un de l'autre (41, 42) et qui présente une résistance à l'écoulement variable, en particulier sur section transversale d'écoulement effective variable de manière correspondante.

11. Installation de freinage hydraulique (30) pour un véhicule (1), une bicyclette, un vélo électrique, un eBike et/ou un Pedelec pouvant être entraînés avec une force musculaire ainsi qu'en outre avec ou sans force motorisée, comprenant :
- un frein (33),
- une conduite de frein (32) pour la connexion hydraulique au frein (33) par le biais d'un fluide de frein (32) et
- un dispositif d'aide au freinage (100) selon l'une quelconque des revendications 1 à 10, qui est connecté hydrauliquement à la conduite de frein (32), à un émetteur (36) et/ou à un récepteur par le biais de l'élément résistant au passage de fluide (50) du dispositif d'aide au freinage (100),
le boîtier adaptateur (40) étant notamment connecté hydrauliquement à la conduite de frein (32), à une conduite de contournement (93), à l'émetteur (36) et/ou au récepteur, de préférence par le biais d'une conduite de dérivation (32-3), par exemple entre une portion (32-1) de la conduite de frein (32) ou de la conduite de contournement (93) située du côté de l'émetteur et une portion (32-2 ; 93-1) de la conduite de frein (32) ou de la conduite de contournement (93), située du côté du récepteur et du côté du frein.

12. Véhicule (1) pouvant être entraîné avec une force musculaire ainsi qu'en outre avec ou sans force motorisée et notamment bicyclette, vélo électrique, eBike ou Pedelec, comprenant :
- au moins une roue (9-1, 9-2) et
- une installation de freinage (30) selon la revendication 11 pour le freinage de l'au moins une roue (9-1, 9-2).
